# EUROPÄISCHE PATENTANMELDUNG

(11) **EP 1 832 405 A2**
(43) Veröffentlichungstag der Anmeldung: **12.09.2007**
(21) Anmeldenummer: 07004861.6
(22) Anmeldetag: 09.03.2007
(51) Int. Cl.: B29C 33/30, B29C 51/30

(54) **Vorrichtung zum Tiefziehen von Formteilen aus einer erwärmten thermoplastischen Kunststofffolie und Verfaren zum Einbau eines Werkzeuges**

(30) Priorität: 11.03.2006 DE 102006011307
(71) Anmelder: ILLIG Maschinenbau GmbH & Co. KG, 74081 Heilbronn (DE)
(72) Erfinder: Köstel, Oliver, 71067 Sindelfingen (DE); Nass, Andreas, 74172 Neckarsulm (DE)

(57) **Zusammenfassung**

Durch die Erfindung wird bei einer Vorrichtung zum Tiefziehen von Formteilen aus einer erwärmten thermoplastischen Kunststofffolie mit einer oder mehreren Station/en zum Formen und/oder Ausstanzen der Formteile mittels eines auf einem Untertisch angeordneten Unterwerkzeuges der Werkzeugwechsel erleichtert. Dieses Unterwerkzeug muss zum Werkzeugwechsel über den Untertisch geschoben werden. Das Verschieben wird dadurch erleichtert, dass während dieser Zeit über eine Druckluftzufuhr zu Austrittsstellen an der Oberfläche des Untertisches ein leichtes Gleiten erzielt wird. Der Aufwand hierzu ist gering, die erforderliche Verschiebekraft ist minimiert.

## Beschreibung

Die Erfindung betrifft eine Vorrichtung zum Tiefziehen von Formteilen aus einer erwärmten thermoplastischen Kunststofffolie nach der Gattung des Hauptanspruches sowie ein Verfahren zum Einbau eines Werkzeuges.

Aus der DE 101 52 891 ist eine gattungsbildende Vorrichtung bekannt, die mehrere Stationen aufweist. Eine Transporteinrichtung führt die Folienbahn durch alle Stationen, bis die Formteile aus der Folienbahn ausgebrochen und gestapelt sind. Danach wird das Restgitter aufgewickelt oder bekannterweise auch direkt einer Mahleinrichtung zugeführt. Vorrichtungen dieser Art weisen mindestens einen Untertisch zur Aufnahme eines Werkzeugunterteils auf, das auswechselbar auf diesem befestigt ist. Zum Wechseln ist es erforderlich, das Werkzeugunterteil nach dem Lösen der Befestigungselemente aus der entsprechenden Station meist zur Bedienseite herauszuziehen. Es ist bekannt, dazu auf der Vorderseite Führungsschienen anzuordnen - anbaubar oder schwenkbar gestaltet - oder einen Hubwagen heranzufahren. Um das Herausziehen des Unterwerkzeuges zu erleichtern ist es bekannt, auf dem Formtisch Rollelemente anzuordnen, die jedoch höhenverschiebbar gestaltet sein müssen, damit das Unterwerkzeug nach dem Einbau auf dem Untertisch bündig aufliegen kann. Die Höhenverschiebung erfolgt meist hydraulisch oder pneumatisch, da das Gewicht des Unterwerkzeuges überwunden werden muss. In bestimmten Fällen wird beim Werkzeugwechsel das Werkzeugoberteil auf dem Werkzeugunterteil abgesetzt und das Werkzeug als Ganzes gewechselt. Dann müssen die Rollelemente und ihre Betätigungseinrichtung für das gesamte Werkzeuggewicht ausgelegt sein. Insgesamt sind diese Rollelemente, ihr Einbau und ihre Betätigungseinrichtung relativ teuer. Wenn man diese Rollelemente nur gefedert ausbildet, also nicht hydraulisch oder pneumatisch betätigbar, so müssen die Federn mit hoher Kraft ausgebildet sein, um das Werkzeuggewicht tragen zu können. Die Werkzeugspannelemente müssen dann diese Kraft beim Befestigen des Werkzeuges überwinden können, wodurch diese wiederum entsprechend dimensioniert werden müssen, was relativ teuer ist.

Der Erfindung liegt die Aufgabe zugrunde, bei einer Vorrichtung zum Tiefziehen von Formteilen aus einer erwärmten thermoplastischen Kunststofffolie den Aufwand für den Werkzeugwechsel zu vereinfachen und die erforderliche Verschiebekraft zu minimieren.

Gelöst ist diese Aufgabe dadurch, dass im Untertisch eine Druckluftzuführung so angeordnet und über Bohrungen im Untertisch so weitergeleitet wird, dass sie zeitweise mit Austrittsstellen an der dem Unterwerkzeug zugewandten Oberfläche in Verbindung gebracht werden kann. Es baut sich auf diese Weise ein Luftpolster auf, auf dem das Werkzeug bzw. das Werkzeugunterteil leicht verschoben werden kann.

Durch das Vorsehen dieser Austrittsstellen ist ein Verfahren zum Zentrieren von zwei Werkzeughälften in einer Station möglich in der Weise, dass man nach dem getrennten Einbau des Werkzeugoberteils einschließlich seiner Befestigung und bei eingeschobenem und grob zentriertem, aber noch nicht befestigtem Werkzeugunterteil, die Station schließt und sich das Werkzeugunterteil auf dem Luftpolster leicht verschiebt, wenn die in Eingriff kommenden Zentriereinrichtungen beider Werkzeugteile für die richtige Zentrierung sorgen, bevor die Befestigung des Werkzeugunterteils bei geschlossener Station erfolgt.

Ausführungsbeispiele der Erfindung sind anhand der schematischen Zeichnungen näher beschrieben. Es zeigen:
- Figur 1:: eine Seitenansicht der Vorrichtung, formend und separat stanzend ausgebildet.
- Figur 2:: eine Seitenansicht der Vorrichtung, ausgebildet als Verpackungsmaschine.
- Figur 3: einen Querschnitt durch einen Untertisch.

- Figur 4: eine Draufsicht auf einen Untertisch.
- Figur 5: einen Schaltplan der Vorrichtung.
- Figur 6: eine Darstellung eines Luftaustrittselements

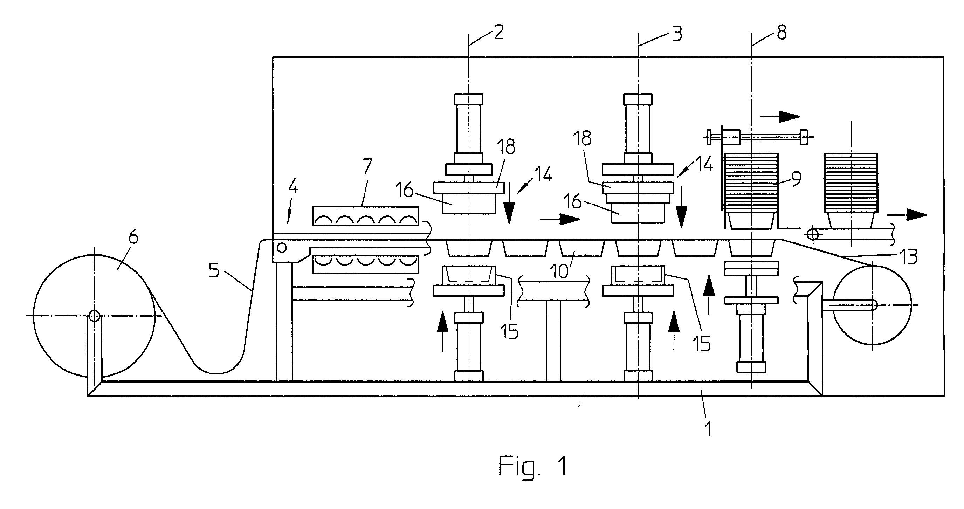

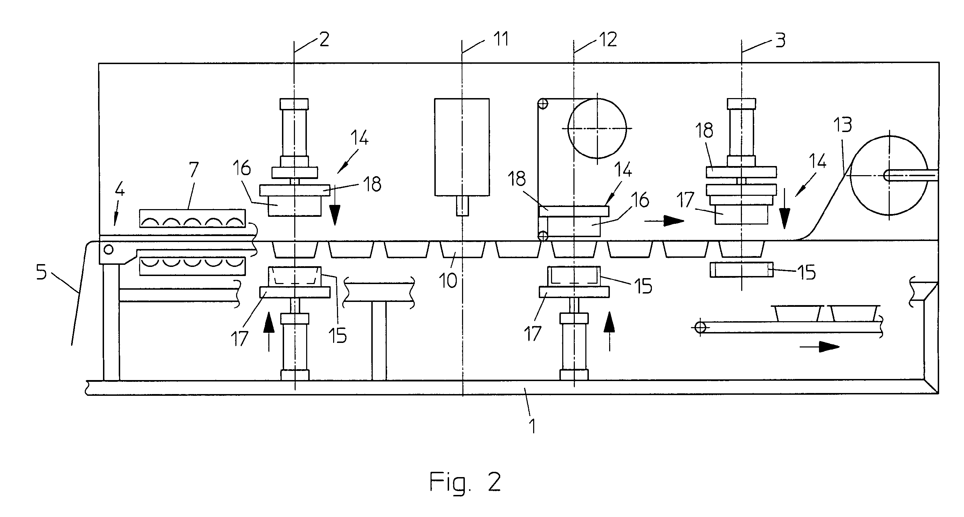

Die Erfindung findet Anwendung bei einer Vorrichtung, wie sie beispielsweise in Figur 1 dargestellt ist. Diese besteht aus einem Gestell 1, einer Formstation 2, einer Stanzstation 3 und einer Transporteinrichtung 4 zum intermittierenden Transport einer Folienbahn 5 durch die Vorrichtung. Falls diese Folienbahn 5 von einer Rolle 6 abgewickelt wird ist eine Heizeinrichtung 7 zum Erwärmen der Folienbahn 5 vorgesehen. Wird die Folienbahn 5 direkt von einem Extruder zugeführt kann ggf. auf diese Heizeinrichtung 7 verzichtet werden. Der Stanzstation 3 ist eine Stapelstation 8 nachgeordnet zum Bilden von Behälterstapeln 9. Die Restfolie 13 wird aufgewickelt oder einer Mühle zugeführt. Es sind aber auch andere Gestaltungen der Vorrichtung bekannt, um die aus der Folienbahn 5 ausgestanzten Formteile 10 Nachbearbeitungsstationen, z. B. über ein Transportband, zuzuführen. Auch können zwischen Formstation 2 und Stanzstation 3 eine Lochstanzeinrichtung oder eine Fülleinrichtung 11 und eine Siegelstation 12 zum Herstellen gefüllter und versiegelter Formteile 10 angeordnet sein. Es liegt dann im letzten Fall eine zur Verpackungsmaschine erweiterte Vorrichtung vor (siehe Figur 2). Ferner kann die Vorrichtung so ausgebildet sein, dass in der Formstation 2 auch das Ausstanzen der Formteile 10 erfolgt und diese dann in der Folienbahn 5 hängend der Stapelstation 8 zugeführt werden. Bei einer kombiniert formenden und stanzenden Formstation 2 kann auch ein Schwenken des Untertisches 17 erfolgen, wie es bei einer aus der DE 33 46 628 C1 bekannten Vorrichtung der Fall ist. Die Transporteinrichtung 4 für die Folienbahn 5 besteht aus zwei umlaufenden Transportketten mit Spitzlaschen oder anderen Greifeinrichtungen, z. B. Kluppen, die die Folienbahn 5 durchdringen oder festklemmen und arbeitet intermittierend.

In die Formstation 2 wird ein auswechselbares Formwerkzeug oder ein kombiniertes Form-/Stanzwerkzeug, bestehend aus Werkzeugoberteil 16 und Werkzeugunterteil 15, eingebaut. Das Werkzeug als Ganzes wird nachfolgend der Einfachheit halber generell als Werkzeug Position 14 bezeichnet. In der Stanzstation 3 besteht dieses Werkzeug 14 ebenfalls aus einem Werkzeugoberteil 16 und einem Werkzeugunterteil 15, ebenso in einer nicht dargestellten Lochstanzstation und in einer Siegelstation 12. Das Werkzeugunterteil 15 sitzt auf einem Untertisch 17, der in der Regel höhenverschiebbar ist, das Werkzeugoberteil 16 am Obertisch 18, der ortsfest oder auch höhenverschiebbar gestaltet ist. Die Erfindung betrifft die Gestaltung des Untertisches 17, um das Wechseln des Werkzeugunterteils 15 zu erleichtern, wobei es jedoch auch bekannt ist, vor dem Wechsel des Werkzeuges 14 das Werkzeugoberteil 16 auf dem Werkzeugunterteil 15 abzulegen und damit beide Werkzeugteile 15, 16 gemeinsam vom Untertisch 17 herunter zu schieben.

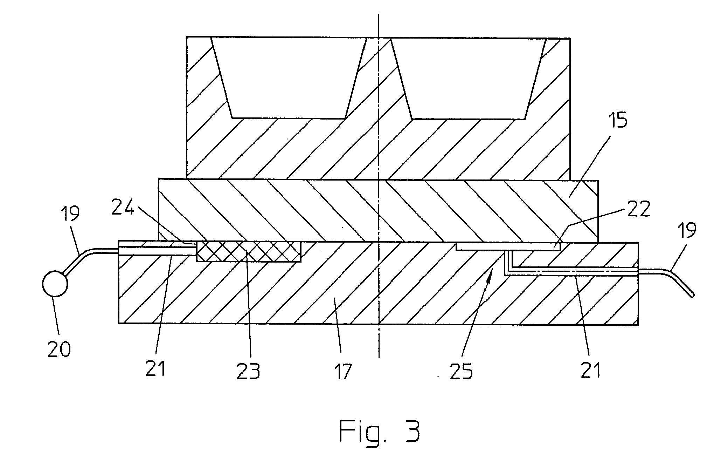

Um dieses Herunterschieben zu erleichtern wird vorgeschlagen, in den Untertisch 17 mündende Druckluftzuführungen 19 vorzusehen, die über Bohrungen 21 im Untertisch 17 Druckluft bis zu der Oberfläche des Untertisches 17 zu führen, die dem Werkzeugunterteil 15 zugewandt ist. Die Austrittsstellen 25 der Bohrungen 21 sind entweder als vergrößerte Senkung 22 mit geringer Tiefe ausgebildet - siehe Figur 3 rechts. Als vorteilhaft hat es sich aber erwiesen, an den Austrittsstellen 25 je ein Luftaustrittselement 23 zu befestigen (siehe Figur 3 links), das aus Metall, Kunststoff oder Keramik besteht. Es ist mit mehreren Luftaustrittsstellen oder Schlitzen versehen, die die zugeführte Druckluft austreten lassen. Gemäß einer besonderen Ausbildung ist das Luftaustrittselement 23 als Sinterteil ausgebildet, das eine besonders große Austrittsfläche bei gleichmäßiger Abströmung bildet. Da die austretende Druckluft auf die geschlossene Fläche des Werkzeugunterteils 15 trifft erfolgt eine Luftströmung nach außen und ein Aufbau eines Luftpolsters, die zum Anheben des Werkzeugunterteils 15 um ein geringes Maß, das im Bereich von unter einem Zehntel Millimeter liegt, führt. Ein Verschieben ist mit geringster Kraft möglich.

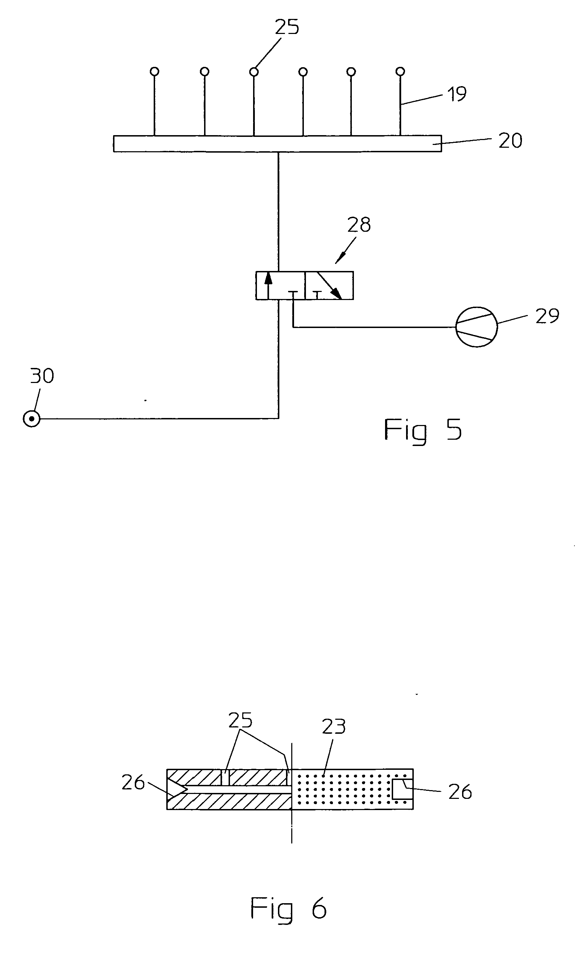

Bei Verwendung eines Luftaustrittselementes 23 der genannten Art hat es sich gemäß einer besonderen Ausführungsform der Erfindung als vorteilhaft erwiesen, die Bohrungen 21 radial auf dessen Außenfläche 24 zuzuführen und in dieser Außenfläche 24 einen ringsum führenden Kanal 26 mit vorzugsweise u-förmigem (Figur 6 rechts) oder v-förmigem Querschnitt (Figur 6 links) vorzusehen. Die Druckluft strömt auf diese Weise gleichmäßig ringsum ins Luftaustrittselement 23 ein und kann so gleichmäßiger auf die vorgesehenen Austrittsstellen 25 (Figur 6 links) aufgeteilt werden oder gleichmäßiger in das poröse Sintermaterial (Figur 6 rechts) eintreten, nach oben ausströmen und ein gleichmäßiges Druckluftpolster aufbauen.

Wenn beim Ausbau oder Einbau eines Werkzeugunterteils 15 oder eines gesamten Werkzeuges 14 ein Teil der Austrittsstellen 25 frei wird darf dies nicht dazu führen, dass durch das Strömen der Druckluft an diesen Stellen ins Freie der Druck in den noch bedeckten Austrittsstellen 25 zusammenbricht und keine Tragfähigkeit des Werkzeugunterteils 15 oder des Werkzeuges 14 mehr gegeben ist. Um dies zu vermeiden ist jede Austrittsstelle 25 mit einer eigenen Druckluftzuführung 19 mit einem Querschnitt Q1 verbunden. Jede Druckluftzuführung 19 ist wiederum mit einem Druckluftspeicher 20, der einen Querschnitt Q2 aufweist, verbunden, wobei Q2 mindestens der Summe aller Querschnitte Q1 entspricht. Es steht deshalb auch beim Strömen von Druckluft ins Freie noch genügend Druckluft zum Aufbau eines Druckluftpolsters an den anderen noch bedeckten Austrittsstellen 25 zur Verfügung.

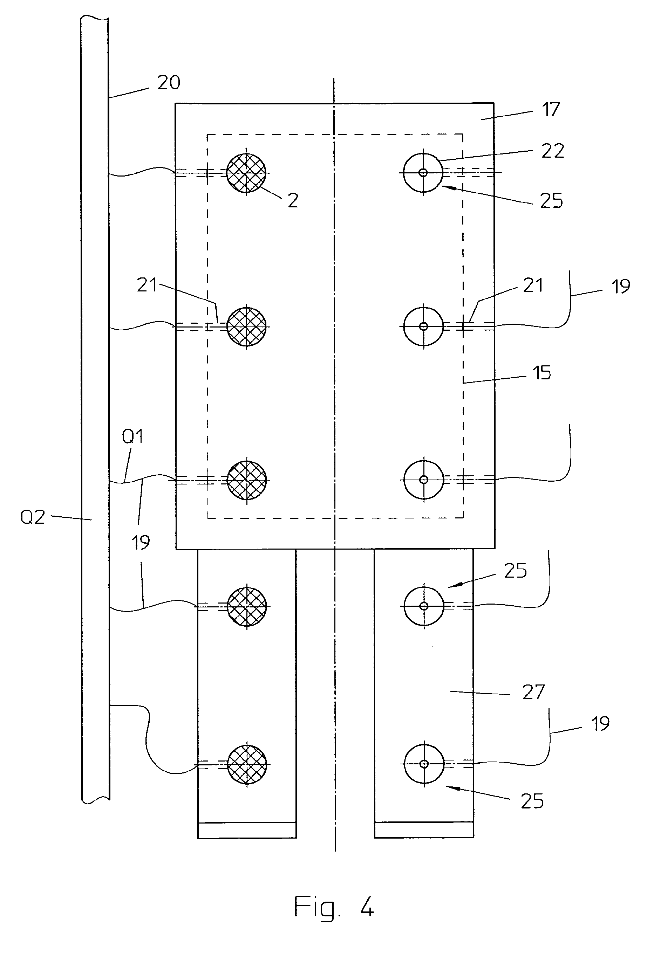

Eine Weiterbildung der Vorrichtung besteht darin, dass zum Werkzeugwechsel am Untertisch 17 Leisten 27 angebracht werden, die gegenüber der bekannten Ausbildung mit Rollen ebenfalls Austrittsstellen 25 mit einer der genannten Ausbildungen aufweisen (Darstellung in Figur 4). Zu diesen führen ebenfalls Druckluftzuführungen 19, die Funktion ist vergleichbar. Auf diese Weise lässt sich das Werkzeugunterteil 15 oder das Werkzeug 14 auf einem Luftpolster gleitend bis auf die Leisten 27 führen, von denen es mit Hubmitteln abgeholt werden kann.

Jede Station 2, 3, 12 der Vorrichtung mit diesen Austrittsstellen 25 im Untertisch 17 lässt einen Verfahrensablauf in der Weise zu, dass man nach dem Einbau und Befestigen des Werkzeugoberteils 16 das Werkzeugunterteil 15 schwimmend auf dem Druckluftpolster auf dem Untertisch 17 grob fixiert und die Station 2, 3, 12 schließt. Die an Werkzeugoberteil 16 und Werkzeugunterteil 15 vorgesehen Zentriereinrichtungen kommen zum Einsatz und zentrieren beide Teile 16, 17 exakt zueinander, indem sie das Werkzeugunterteil 15 entsprechend auf dem Luftpolster gleitend leicht in die richtige Lage verschieben. In dieser fixierten Lage wird die Druckluftzufuhr zu den Luftaustrittsstellen 25 unterbrochen und die Befestigung des Werkzeugunterteils 15 erfolgt in bekannter Weise manuell oder über federbetätigte, mit Druckluft lösbare Klemmeinrichtungen.

In Weiterbildung der Erfindung wird vorgeschlagen, die Druckluftleitungen 19 nach dem Fixieren des Werkzeugunterteils 15 mit einer Vakuumquelle 29 zu verbinden, sodass über das Vakuum eine zusätzlich zu den Klemmeinrichtungen wirksame Haltekraft aufgebaut wird. Die Klemmeinrichtungen können entsprechend kleiner dimensioniert werden, Vakuum ist in der Vorrichtung in der Regel sowieso vorhanden und diese Maßnahme bedingt nur einen geringen Aufwand. Die Umschaltung von der Druckluftquelle 30 auf Vakuum erfolgt über ein Ventil 28 - siehe Schaltplan Figur 5.

### Bezugszeichenliste

| | | | |
|---|---|---|---|
| 1 | Gestell | | |
| 2 | Formstation | | |
| 3 | Stanzstation | | |
| 4 | Transporteinrichtung | | |
| 5 | Folienbahn | | |
| 6 | Rolle | | |
| 7 | Heizeinrichtung | | |
| 8 | Stapelstation | | |
| 9 | Behälterstapel | | |
| 10 | Formteil | | |
| 11 | Fülleinrichtung | | |
| 12 | Siegelstation | | |
| 13 | Restfolie | | |
| 14 | Werkzeug | | |
| 15 | Werkzeugunterteil | | |
| 16 | Werkzeugoberteil | | |
| 17 | Untertisch | | |
| 18 | Obertisch | | |
| 19 | Druckluftzuführung | | |
| 20 | Druckluftspeicher | | |
| 21 | Bohrungen | | |
| 22 | Senkung | | |
| 23 | Luftaustrittselement | | |
| 24 | Außenfläche | | |
| 25 | Austrittsstelle | | |
| 26 | Kanal | | |
| 27 | Leisten | | |
| 28 | Ventil | | |
| 29 | Vakuumquelle | | |
| 30 | Druckluftquelle | | |
| | | | |
| | | | |
| | | | |

## Patentansprüche

1. Vorrichtung zum Tiefziehen von Formteilen aus einer erwärmten thermoplastischen Kunststofffolie mit einer oder mehreren Station/en zum Formen und/oder Ausstanzen der Formteile mittels eines auf einem Untertisch angeordneten Werkzeugunterteils, **dadurch gekennzeichnet, dass** im Untertisch (17) Druckluftzuführungen (19) angeordnet sind, die über Bohrungen (21) mit Austrittsstellen (25) an der dem Werkzeugunterteil (15) zugewandten Oberfläche des Untertisches (17) verbindbar sind.

2. Vorrichtung nach Anspruch 1, **dadurch gekennzeichnet, dass** die Austrittsstellen (25) eine Senkung (22) aufweisen.

3. Vorrichtung nach Anspruch 1, **dadurch gekennzeichnet, dass** die Austrittsstellen (25) durch ein Luftaustrittselement (23), das in den Untertisch (17) eingesetzt ist, gebildet werden.

4. Vorrichtung nach Anspruch 3, **dadurch gekennzeichnet, dass** das Luftaustrittselement (23) als Sinterteil aus Metall, Keramik oder Kunststoff ausgebildet ist.

5. Vorrichtung nach Anspruch 3 oder 4, **dadurch gekennzeichnet, dass** das Luftaustrittselement (23) an der Außenfläche (24) ringsum einen Kanal (26) aufweist, auf den die Bohrung (21) trifft.

6. Vorrichtung nach Anspruch 5, **dadurch gekennzeichnet, dass** der Kanal (26) einen u-förmigen oder v-förmigen Querschnitt aufweist.

7. Vorrichtung nach einem der Ansprüche 1 bis 6, **dadurch gekennzeichnet, dass** eine Verbindungsmöglichkeit der Druckluftzuführungen (19) mit einer Vakuumquelle (29) vorgesehen ist.

8. Vorrichtung nach einer der Ansprüche 1 bis 7, **dadurch gekennzeichnet, dass** zum Werkzeugwechsel Leisten (27) vorgesehen sind, die ebenfalls Druckluftzuführungen (19), Bohrungen (21) und Austrittsstellen (25) für Druckluft aufweisen.

9. Verfahren zum Wechseln eines Werkzeugs, bestehend aus Werkzeugunterteil und Werkzeugoberteil, in einer Station einer Vorrichtung zum Tiefziehen von Formteilen aus einer erwärmten thermoplastischen Kunststofffolie mit einem Untertisch zum Aufnehmen des Werkzeugunterteils, bei dem im Untertisch Druckluftzuführungen (19) angeordnet sind, die über Bohrungen (21) mit Austrittsstellen (25) an der dem Werkzeugunterteil (15) zugewandten Oberfläche des Untertisches (17) verbindbar sind, **dadurch gekennzeichnet, dass** nach dem Einbau und Befestigen des Werkzeugoberteils (16) bei noch unbefestigtem Werkzeugunterteil (15) und bei zugeführter Druckluft zu den Austrittsstellen (25) die Station (2, 3, 12) geschlossen, dabei die Werkzeugteile (15, 16) zentriert, die Druckluftzufuhr unterbrochen und danach die Befestigung des Werkzeugunterteils (15) vorgenommen wird.

10. Verfahren nach Anspruch 9, **dadurch gekennzeichnet, dass** nach dem Abschalten der Druckluftzufuhr an den Austrittsstellen (25) Vakuum zum Festhalten des Werkzeugunterteils (15) angelegt wird.
